# DEMANDE DE BREVET EUROPEEN

(11) **EP 3 143 853 A1**
(43) Date de publication de la demande: **22.03.2017**
(21) Numéro de dépôt: 16305213.7
(22) Date de dépôt: 24.02.2016
(51) Int. Cl.: A01B 33/14

(54) **FRAISE POUR LE TRAVAIL DU SOL**

(30) Priorité: 16.09.2015 FR 1558689
(71) Demandeur: Claire Fontaine S.A. Par Abreviation C.F.S.A., 44450 La Chapelle-Basse-Mer (FR)
(72) Inventeur: QUERU, Arnaud, 44470 CARQUEFOU (FR)
(74) Mandataire: Jacobacci Coralis Harle

(57) **Abrégé**

L'invention concerne une fraise pour le travail du sol comprenant un arbre motorisé (2) d'axe longitudinal (L) sur lequel sont fixés une pluralité d'ensembles (3) de dents (4), chacun desdits ensembles de dents (3) comprenant un support de dents (8) solidarisé avec ledit arbre motorisé (2), sur lequel support de dents (8) sont fixées n dents (4) régulièrement réparties autour dudit axe longitudinal (L), lesdites dents (4) étant constituées chacune d'une partie active (41) prolongée par une embase (42).
Conformément à l'invention, ledit support de dents est constitué d'un boitier (8) définissant un logement dont l'épaisseur correspond, au jeu près, à l'épaisseur desdites embases de dents (42).
De plus, des ouvertures latérales sont ménagées sur la périphérie du boitier (8), pour le passage de l'embase (42) desdites dents (4) ; et le contour périphérique desdites embases de dents (42) comporte des surfaces d'appui adaptées pour assurer le verrouillage en position de n - 1 desdites dents (4) dans ledit logement de boitier (84), et la dernière desdites dents (4), dite dent finale, étant verrouillée en position dans ledit logement de boitier (84) par un moyen de blocage rapporté (86).

## Description

La présente invention concerne de manière générale le domaine du machinisme agricole.

Elle concerne plus particulièrement une fraise pour le travail du sol, comprenant un arbre motorisé d'axe longitudinal sur lequel sont fixées une pluralité de dents.

### ARRIERE-PLAN TECHNOLOGIQUE

Les fraises pour le travail du sol consistent en des outils rotatifs comprenant un arbre allongé, de section généralement circulaire, qui est monté sur des paliers au niveau de chacune de ses extrémités, et dont la longueur est équipée d'une pluralité d'ensembles de dents, régulièrement répartis, par exemple tous les 7 à 15 cm.

L'une des extrémités de cet arbre est associée à des moyens moteurs pour son entraînement en rotation.

Les ensembles de dents comprennent généralement chacun un support en forme de platine soudée sur l'arbre allongé, dont le plan s'étend perpendiculairement à l'axe longitudinal de cet arbre, et sur laquelle sont boulonnées les dents de travail du sol, en nombre généralement compris entre deux et six, souvent quatre.

Chaque platine support comporte pour cela un nombre d'orifices adapté, pour la réception des boulons assurant la fixation des dents.

Les dents sont chacune constituées d'une partie active adaptée au travail du sol, prolongée par une embase munie d'un orifice pour le passage du boulon de fixation sur la platine support.

En fonction des largeurs de travail, de telles fraises peuvent comporter entre 30 et 110 dents boulonnées.

Cependant, les dents de la fraise s'usent au fur et à mesure de leur utilisation et il est nécessaire de les remplacer régulièrement.

Pour cela, les boulons qui maintiennent les dents sont sectionnés au moyen d'un outillage adapté (généralement une disqueuse) ; les dents usagées sont déposées et changées par des dents neuves, chacune maintenue par boulonnage.

Mais ces opérations de changement des dents de la fraise sont relativement longues et pénibles du fait du nombre important de boulons à démonter et à remonter.

### OBJET DE L'INVENTION

La présente invention propose un système original de fixation des dents sur l'arbre support de la fraise, qui permet de simplifier le montage et le démontage des dents et de gagner du temps en particulier lors de leurs opérations de remplacement en cas d'usure ou de casse.

Pour cela, l'invention propose une fraise pour le travail du sol comprenant un arbre motorisé d'axe longitudinal sur lequel sont fixés une pluralité d'ensembles de dents, chacun desdits ensembles de dents comprenant un support de dents solidarisé avec ledit arbre motorisé, sur lequel support de dents sont fixées n dents régulièrement réparties autour dudit axe longitudinal, n étant supérieur à 2, lesdites dents étant constituées chacune d'une partie active adaptée au travail du sol, prolongée par une embase en forme de profilé plan délimitée par un contour périphérique ; cette fraise étant caractérisée par le fait que ledit support de dents est constitué d'un boitier comprenant une platine et une contre-platine, parallèles entre elles, s'étendant chacune dans un plan perpendiculaire audit axe longitudinal, espacées l'une de l'autre par des entretoises pour définir un logement dont l'épaisseur correspond, au jeu près, à l'épaisseur desdites embases de dents ;
lesquelles platine et contre-platine dudit boitier comportent chacune un orifice pour leur traversée par ledit arbre motorisé, la bordure desdits orifices étant solidarisée par soudage avec ledit arbre motorisé ; et des ouvertures latérales sont ménagées sur la périphérique dudit boitier, entre lesdites platine et contre-platine et entre lesdites entretoises, pour le passage de l'embase desdites dents ;
le contour périphérique desdites embases de dents comportant :
- au moins une surface d'appui d'entretoise pour l'appui contre l'une au moins desdites entretoises,
- une surface d'appui d'arbre pour l'appui contre ledit arbre motorisé,
- une première surface d'appui de dent pour l'appui contre l'embase d'une première dent juxtaposée, et
- une seconde surface d'appui de dent pour l'appui contre l'embase d'une seconde dent juxtaposée,
lesdites surfaces d'appui étant adaptées pour assurer le verrouillage en position de n - 1 desdites dents dans ledit logement de boitier,
et la dernière desdites n dents, dite dent finale, étant verrouillée en position dans ledit logement de boitier par un moyen de blocage rapporté.

Les n dents de chaque ensemble de dents sont ainsi maintenues dans leur boitier, bloquées entre elles, ainsi que par l'arbre motorisé, la structure de boitier et un moyen de blocage rapporté.

De la sorte, le démontage des n dents de chaque ensemble de dents est obtenu par dégradation du moyen de blocage rapporté ; et après remontage de nouvelles dents, le verrouillage de toutes les dents de chaque ensemble est obtenu par un nouveau moyen de blocage rapporté.

Selon une caractéristique préférée, ledit moyen de blocage rapporté de ladite dent finale est en forme de boulon dont la vis s'étend au travers - d'un orifice ménagé dans l'embase de ladite dent finale, et - d'un orifice ménagé dans ladite platine et/ou dans ladite contre-platine.

Selon encore une autre particularité, toutes les dents de la fraise comportent une embase munie d'un orifice adapté au passage de ladite vis dudit boulon de blocage.

De la sorte, toutes les dents peuvent servir de dent finale, ce qui facilite les opérations de montage des dents.

Selon encore une autre particularité, ladite contre-platine comporte une ouverture qui s'étend jusqu'à son orifice de passage de l'arbre motorisé, laquelle ouverture correspond à l'encombrement d'une partie au moins de l'embase de la dent finale, pour le positionnement et le blocage partiel de cette dernière.

Selon une caractéristique avantageuse, chaque boitier comporte :
(i) n - 1 entretoises soudées sur la périphérie desdites platine et contre-platine, chacune adaptée à coopérer avec ladite surface d'appui d'entretoise de l'embase d'une desdites dents, et
(ii) une entretoise amovible en forme de boulon pour ladite dent finale.

Le contour de l'embase des dents comporte avantageusement un chant arrière, un chant d'extrémité et un chant avant, ladite surface d'appui d'entretoise étant ménagée sur ledit chant arrière, ladite première surface d'appui de dent étant ménagée sur ledit chant d'extrémité et lesdites seconde surface d'appui de dent et surface d'appui d'arbre étant ménagées sur ledit chant avant.

De préférence, ladite surface d'appui d'entretoise de l'embase desdites dents est en forme de surface plane.

Toujours selon une autre caractéristique, la fraise comporte un arbre motorisé de section circulaire, et ladite surface d'appui d'arbre de l'embase desdites dents est en forme d'arc de cercle.

De son côté, ladite première surface d'appui de dent est de préférence en forme d'organe en saillie ménagé sur le chant d'extrémité, et ladite seconde surface d'appui de dent est en forme de réservation ménagée sur ledit chant avant ; et lesdits organe en saillie et réservation ont des formes complémentaires, de sorte qu'un organe en saillie d'une dent coopère avec la réservation complémentaire d'une dent juxtaposée pour le verrouillage en position desdites dents dans ledit boitier.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective d'une fraise conforme à l'invention, avec ses paliers d'extrémité illustrés éclatés ;
- la figure 2 est une vue en perspective de l'un des ensembles de dents de la fraise illustrée sur la figure 1, représenté ici isolément ;
- la figure 3 est une vue de face d'un ensemble de dents conforme à la figure 2, ici représenté monté sur l'arbre motorisé de la fraise ;
- la figure 4 est une vue de côté de l'ensemble de dents illustré sur la figure 3 ;
- la figure 5 est une vue en perspective d'un boitier de l'un des ensembles de dents de la fraise conforme à l'invention, représenté sans les dents associées ;
- la figure 6 est une vue de côté du boitier illustré sur la figure 5 ;
- la figure 7 est une vue de face arrière du boitier illustré sur les figures 5 et 6 ;
- la figure 8 est une vue de face avant du boitier illustré sur les figures 5 à 7 ;
- la figure 9 est une vue en perspective de l'une des dents des ensembles de dents de la fraise illustrée sur la figure 1 ;
- la figure 10 est une vue de face de la dent illustrée sur la figure 9 ;
- la figure 11 est une vue de dessus de la dent illustrée sur les figures 9 et 10 ;
- les figures 12 à 17 illustrent, en six étapes, le montage des dents de chaque ensemble de dents au sein de leur boitier support.

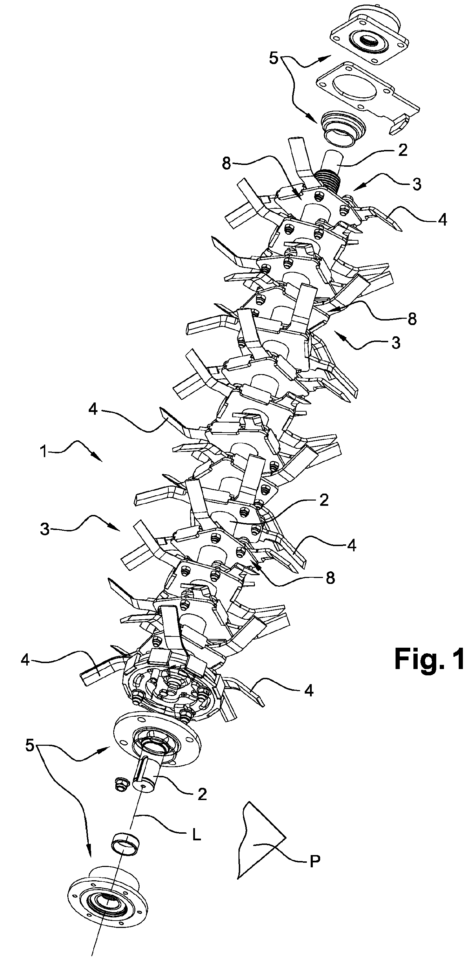

On a représenté sur la figure 1 une fraise 1 pour le travail du sol, conforme à l'invention, comprenant un arbre 2 équipé d'une pluralité d'ensembles ou de groupes 3 de dents 4.

L'arbre 2, d'axe longitudinal L, est de section circulaire constante sur toute sa longueur.

Ses deux extrémités sont équipées de systèmes de paliers 5 (illustrés ici de manière éclatée), pour son montage sur un châssis support (non représenté), par exemple muni de moyens pour son attelage à un véhicule tracteur.

L'arbre 2 est également associé à des moyens assurant son entrainement en rotation autour de son axe longitudinal L, pour permettre aux dents 4 de travailler la couche de surface du sol.

Ces moyens d'entrainement (non représentés) peuvent consister en un pignon monté sur l'arbre 2, coaxialement à celui-ci, au niveau de l'une de ses extrémités, et destiné à être entraîné par une chaîne.

Les dents 4 de la fraise 1 sont agencées par ensembles 3 régulièrement répartis sur la longueur de l'arbre 2.

En l'occurrence, dans le mode de réalisation représenté, la fraise 1 comporte 14 ensembles 3 de dents 4 espacés les uns des autres d'une distance de l'ordre de 7 à 15 cm, chacun desdits ensembles 3 comportant quatre dents 4.

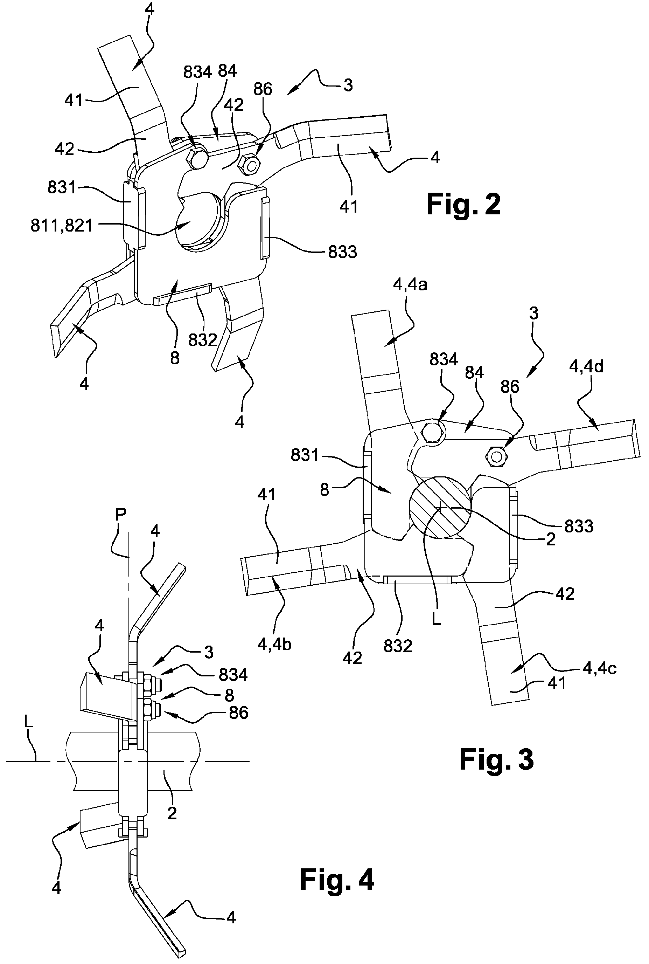

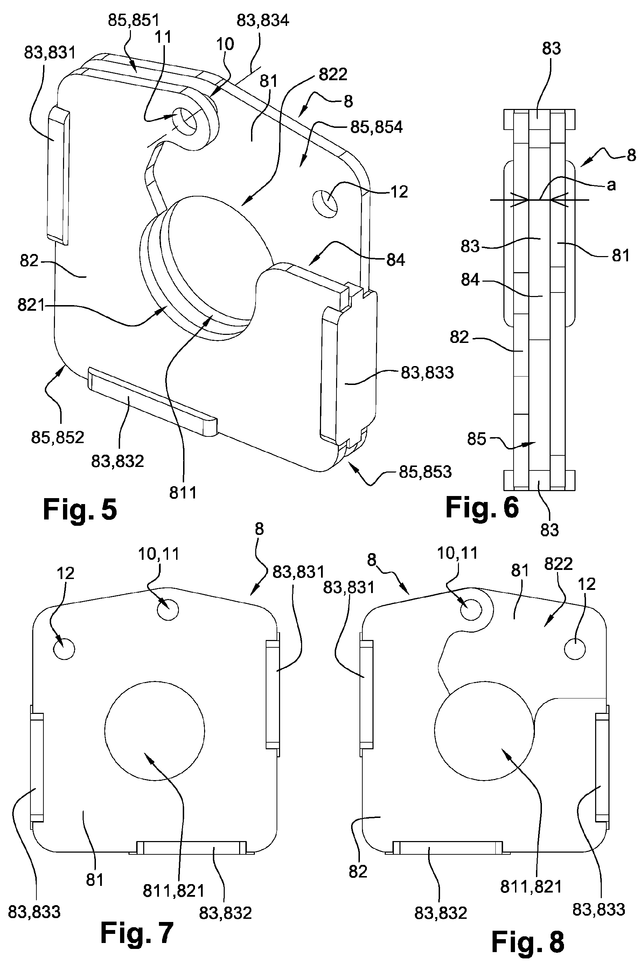

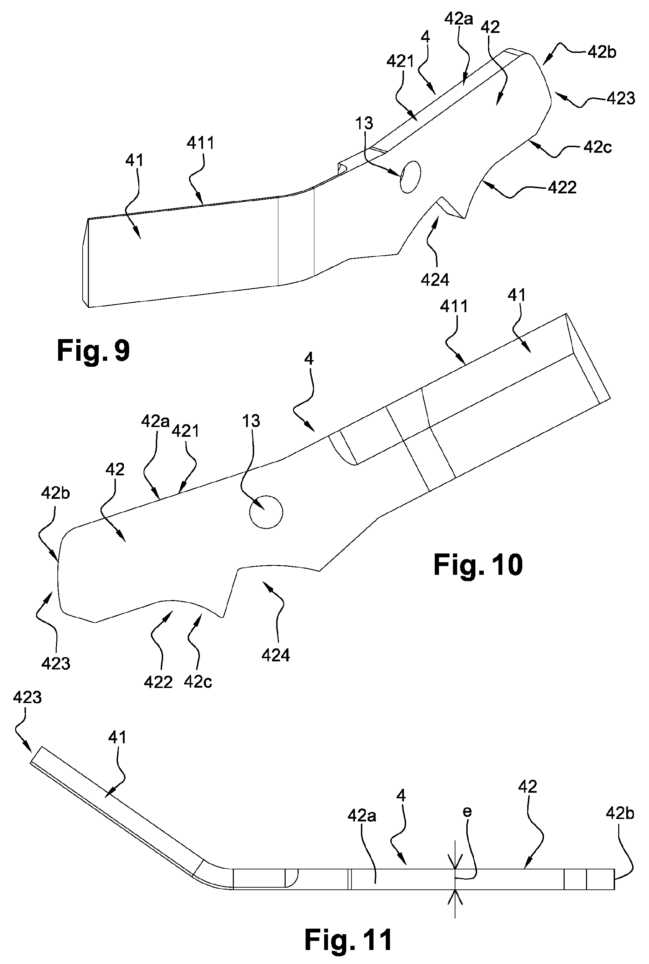

Comme illustré sur les figures 2 à 4, chaque ensemble 3 de dents 4 comprend un support 8, détaillé isolément sur les figures 5 à 8, qui est solidarisé avec l'arbre motorisé 2 et sur lequel sont fixées les quatre dents 4, dont l'une est détaillée isolément sur les figures 9 à 11.

Les ensembles 3 de dents 4 s'étendent chacun dans un plan P globalement perpendiculaire à l'axe longitudinal L de l'arbre motorisé 2.

Dans chaque ensemble 3 les dents 4 sont régulièrement réparties autour de l'axe longitudinal L.

Ici, les dents 4 de la fraise 1 comportent une partie active d'extrémité 41 adaptée au travail du sol, prolongée par une embase 42 pour sa fixation sur le support 8 ; et ladite partie active d'extrémité 41 des dents 4 est inclinée par rapport au plan P précité.

En outre, chaque ensemble 3 comporte une alternance de dents 4 inclinées d'un côté et de l'autre par rapport à ce plan P (voir figures 1, 2 et 4), lesdites dents 4 étant ainsi symétriques deux à deux afin de retourner la terre de chaque côté de leur support 8.

La figure 2 montre en perspective l'un de ces ensembles 3 de dents 4 séparé de l'arbre motorisé 2.

Les figures 3 et 4 sont des vues respectivement de face et de côté de l'ensemble 3 de dents 4 dont le support 8 est ici solidarisé avec l'arbre motorisé 2, de préférence par soudage.

Comme on peut le voir sur les figures 2 à 11, conformément à la présente invention, le support 8 des dents 4 est constitué d'un boitier comprenant une platine 81 et une contre-platine 82, parallèles entre elles et qui sont espacées l'une de l'autre par des entretoises 83 pour définir un logement 84 dont l'épaisseur a correspond, au jeu près, à l'épaisseur e des embases 42 des dents 4 ;
en outre :
- la platine 81 et la contre-platine 82 comportent chacune un orifice, respectivement 811 et 821, pour leur traversée par l'arbre motorisé 2, la bordure de ces orifices 811 et 821 étant solidarisée par soudage avec ledit arbre motorisé 2,
- des ouvertures latérales 85 sont ménagées sur la périphérie du boitier 8, entre lesdites platine 81 et contre-platine 82, et entre les entretoises 83, dans le prolongement du logement 84, pour le passage de l'embase 42 des dents 4 ; et
- le contour périphérique desdites embases 42 de dents 4 est structuré pour permettre leur verrouillage dans ledit boitier 8, et il comporte pour cela :
   (a) au moins une surface d'appui d'entretoise 421 pour l'appui contre l'une desdites entretoises 83,
   (b) une surface d'appui d'arbre 422 pour l'appui contre l'arbre motorisé 2,
   (c) une première surface d'appui de dent 423 pour l'appui contre l'embase 42 d'une première dent 4 juxtaposée, et
   (d) une seconde surface d'appui de dent 424 pour l'appui contre l'embase 42 d'une seconde dent 4 juxtaposée,
   lesdites surfaces d'appui 421, 422, 423 et 424 étant adaptées pour assurer le verrouillage en position de trois desdites dents 4 dans le logement 84 du boitier 8, et la quatrième dent 4, dite dent finale, étant verrouillée en position dans ledit logement de boitier 84 par un moyen de blocage rapporté 86, ici en forme de boulon.

En l'occurrence, comme on peut le voir sur les figures 5 à 8, la platine 81 du boitier 8 a une forme générale globalement carrée. Elle est réalisée en tôle métallique, par exemple en acier, de quelques millimètres d'épaisseur, et elle comporte en son centre l'orifice 811 pour le passage de l'arbre motorisé 2.

De son côté, la contre-platine 82 est également de forme générale carrée. Elle est réalisée en tôle métallique, par exemple en acier, de quelques millimètres d'épaisseur, et elle comporte en son centre l'orifice 821 de passage de l'arbre motorisé 2.

Cette contre-platine 82 comporte encore une ouverture 822 qui s'étend depuis sa bordure périphérique jusqu'à son orifice central 821, correspondant à l'encombrement d'une partie de l'embase 42 de la dent finale 4, pour le positionnement et le blocage de cette dernière, comme on le verra plus loin.

Les platine 81 et contre-platine 82 s'étendent parallèlement l'une à l'autre, espacées de la distance a, comme expliqué précédemment, et avec leurs orifices centraux 811 et 821 disposés coaxialement l'un à l'autre ; en position sur l'arbre 2 elles s'étendent parallèlement au plan P perpendiculaire à l'axe longitudinal L.

De plus, elles comportent les entretoises 83 rapportées au niveau de leur périphérie, à savoir :
- trois entretoises 831, 832 et 833 fixes, rapportées par soudage, assurant l'écartement a recherché entre la platine 81 et la contre-platine 82, et adaptées chacune à coopérer avec la surface d'appui d'entretoise 421 de l'embase 42 de l'une des dents 4, et
- une entretoise 834 amovible, en forme de boulon (visible sur les figures 2 à 4 et simplement schématisée sur la figure 5), adaptée à coopérer avec la surface d'appui d'entretoise 421 de la dent finale 4.
La platine 81 et la contre-platine 82 comportent des orifices, respectivement 10 et 11, en correspondance, pour le passage de la vis de ce boulon/entretoise 834.

A noter que les entretoises 831, 832 et 833 peuvent être obtenues monobloc avec la platine 81 ou la contre-platine 82, et solidarisées avec l'autre élément par soudage.

Les différentes entretoises 831, 832, 833 et 834 sont espacées les unes des autres pour constituer les ouvertures 85 précitées, en vue de l'introduction et du blocage des embases de dents 42.
En l'occurrence, une ouverture 851 est ménagée entre le boulon/entretoise amovible 834 et l'entretoise fixe 831. Une ouverture 852 est ménagée entre les entretoises fixes 831 et 832. Une ouverture 853 est ménagée entre les entretoises fixes 832 et 833 ; et une ouverture 854 est ménagée entre l'entretoise fixe 833 et l'entretoise amovible 834, au niveau de l'ouverture 822 ménagée dans la contre-platine 82.

Sur les figures 5, 7 et 8, on remarque également la présence d'un orifice 12 réalisé dans la platine 81 pour le passage de la vis du boulon 86 de verrouillage de la dent finale 4. Cet orifice 12 est ménagé dans l'encombrement de l'ouverture 822 de la contre-platine 82.

Comme on peut le voir sur les figures 9 à 11, les dents 4 de la fraise 1 sont réalisées monobloc.

Tel que précisé ci-dessus, ces dents 4 comportent une embase 42 de forme générale plane, d'épaisseur e (figure 11), qui se prolonge par une partie active 41, également plane, décalée angulairement par rapport à ladite embase 42. L'angle de ce décalage angulaire est compris entre 15 et 90°, et il est ici de l'ordre de 30 à 40°.

Comme expliqué ci-dessus, deux types de dents 4 sont prévus pour équiper les ensembles 3, à savoir : l'un avec un décalage angulaire de la partie active 41 d'un côté par rapport au plan de l'embase 42, et l'autre avec un décalage angulaire de la partie active 41 de l'autre côté par rapport au plan de l'embase 42, pour obtenir des ensembles 3 symétriques par rapport au plan P précité, munis de dents 4 à partie active décalée alternativement.

La bordure active 411 de la partie active 41 des dents 4 est prévue biseautée pour optimiser sa pénétration en terre.

Les embases 42 des dents 4 de la fraise 1 sont toutes identiques ; et le contour de cette embase 42 comporte :
- un chant arrière 42a, ici orienté du côté de la bordure biseautée 411 de la partie active 41, sur lequel est ménagée la surface d'appui d'entretoise 421 ;
- un chant d'extrémité 42b, à l'opposé de la partie active 41, sur lequel est ménagée la première surface d'appui de dent 423, et
- un chant avant 42c (orienté ici du côté opposé à la bordure biseautée 411 de la partie active 41), sur lequel sont ménagées la seconde surface d'appui de dent 424 et la surface d'appui d'arbre 422.

La surface d'appui d'entretoise 421 est en forme de surface plane ; la surface d'appui d'arbre 422 est en forme d'arc de cercle pour obtenir un appui optimal sur l'arbre motorisé 2 de section circulaire ; de leur côté, la première surface d'appui de dent 423 est en forme d'organe en saillie, et la seconde surface d'appui de dent 424 est en forme de réservation, ces organe en saillie et réservation ayant des formes complémentaires de sorte qu'un organe en saillie 423 d'une dent 4 coopère avec la réservation 424 complémentaire d'une dent 4 juxtaposée, en vue du verrouillage en position des dents 4 dans le boitier support 8.

Un orifice 13 est prévu dans l'embase 42, positionné et dimensionné de manière adaptée pour pouvoir venir en correspondance de l'orifice 12 de la platine 81, en vue de recevoir la vis du boulon de verrouillage 86.
De la sorte, toutes les dents 4 à disposition peuvent faire office de dent finale lors du montage dans le boitier 8, ce qui évite à l'opérateur de rechercher une dent spécifique à cet effet.

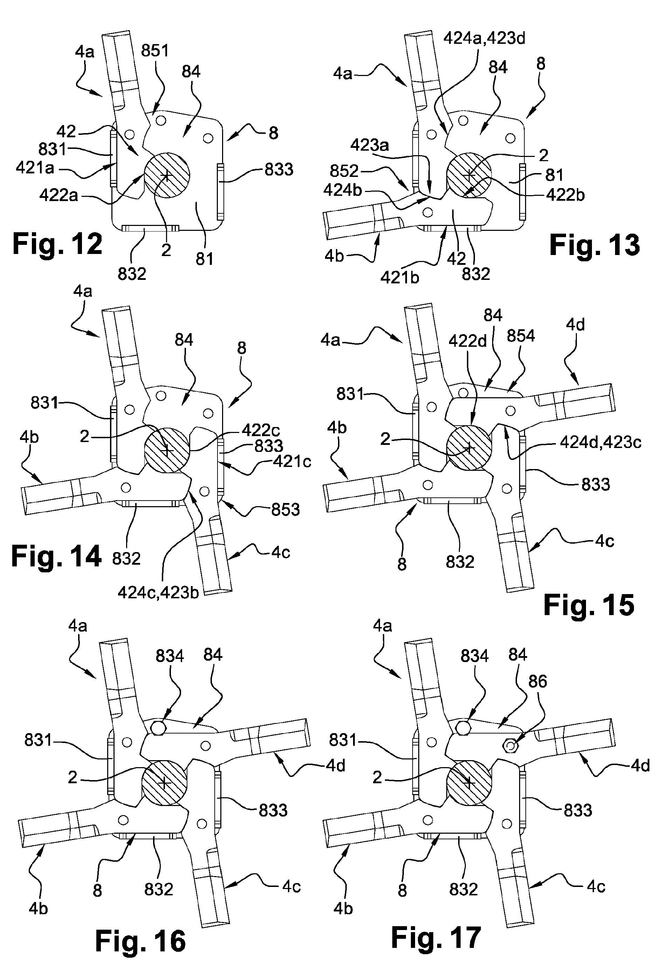

La fixation des différents boitiers supports 8 sur la longueur de l'arbre 2 s'effectue par enfilement desdits boitiers 8 sur ledit arbre 2 au moyen des orifices coaxiaux 811 et 821 des platine 81 et contre-platine 82, puis par soudage sur ledit arbre 2 des bordures de ces orifices 811, 821.
Ensuite, le montage des dents 4 de chaque ensemble de dents 3 s'effectue de la manière illustrée schématiquement sur les figures 12 à 17.

Sur ces figures 12 à 17, par mesure de simplification, on a seulement représenté la platine 81 d'un boitier 8, l'arbre motorisé 2 et le positionnement des dents 4, repérées successivement 4a, 4b, 4c et 4d, dans l'ordre chronologique de la pose (la dent 4a étant la première posée et la dent 4d correspondant à la dent finale).
De plus, des indices a, b, c et d sont affectés aux surfaces d'appui 421, 422, 423 et 424 pour identifier la dent concernée dans l'ordre chronologique de pose.

Tel qu'illustré sur la figure 12, l'opérateur pose la première dent 4a en introduisant son embase 42 dans le logement 84 du boitier 8, par l'ouverture 851, sa surface d'appui d'arbre 422a venant en appui contre l'arbre 2 (plus précisément contre la surface périphérique cylindrique de cet arbre 2) ; et sa surface d'appui d'entretoise 421a venant en appui contre l'entretoise fixe 831 (plus précisément contre une partie de cette entretoise 831 orientée vers l'intérieur du logement 84).

Ensuite, l'embase de la seconde dent 4b est introduite dans le logement 84, tel qu'illustré sur la figure 13, par l'ouverture 852, et positionnée de sorte que - sa surface d'appui d'arbre 422b vienne en appui contre l'arbre 2, - sa surface d'appui d'entretoise 421b vienne en appui contre l'entretoise fixe 832, et - sa seconde surface d'appui de dent 424b vienne en appui contre la première surface d'appui de dent 423a de la première dent 4a.

Ce positionnement est possible du fait de la forme de la dent 4 et d'une ouverture de positionnement légèrement supérieure au besoin, de façon à disposer d'un léger jeu d'assemblage.

Le montage se poursuit par l'introduction de l'embase de la troisième dent 4c dans le logement 84, tel qu'illustré sur la figure 14, par l'ouverture 853. Cette embase de la dent 4c est positionnée de sorte que - sa surface d'appui d'arbre 422c vienne en appui contre l'arbre 2, - sa surface d'appui d'entretoise 421c vienne en appui contre l'entretoise fixe 833, et - sa seconde surface d'appui de dent 424c vienne en appui contre la première surface d'appui de dent 423b de la deuxième dent 4b.

Là encore, ce positionnement est possible du fait de la forme de la dent 4 et de la présence d'une ouverture de positionnement légèrement supérieure au besoin, de façon à disposer d'un léger jeu d'assemblage.

L'embase de la dent finale 4d est positionnée ensuite dans le logement 84, tel qu'illustré sur la figure 15, par l'ouverture 854, avec - sa surface d'appui d'arbre 422d en appui contre l'arbre 2, - sa seconde surface d'appui de dent 424d en appui contre la première surface d'appui de dent 423c de la troisième dent 4c, et - sa première surface d'appui de dent 423d en appui contre la seconde surface d'appui de dent 424a de la première dent 4a.

Un tel positionnement de la dent finale 4d est facilité du fait de l'absence du boulon/entretoise amovible 834 et de la présence de l'ouverture 822 ménagée dans la contre-platine 82.

L'opérateur pose ensuite le boulon/entretoise 834 (figure 16) en passant sa vis au travers des orifices 10, 11 de la platine 81 et de la contre-platine 82, de sorte à ce que ladite vis vienne en appui contre la surface d'appui d'entretoise 421d de la dent finale 4d pour servir de butée.

Enfin, le verrouillage de l'ensemble est finalisé par la pose du boulon de blocage 86, dont la vis passe au travers de l'orifice 13 de la dent finale 4d et de l'orifice 12 de la platine 81 (figure 17).

Le montage des dents 4a, 4b, 4c et 4d sur chaque boitier support 8 s'effectue donc par verrouillage mutuel desdites dents 4, et par blocage au moyen des deux boulons rapportés 834 et 86.

Bien entendu, lors de l'opération de montage, l'opérateur est amené à tenir compte du sens des dents 4, pour obtenir le montage alterné précité qui est recherché.

En cas de remplacement des dents 4 de la fraise 1 (du fait de leur usure ou de leur casse), pour chaque ensemble de dents 3, seul le boulon 86 nécessite d'être enlevé, par découpe à la disqueuse.
Ensuite, les dents 4 de chaque ensemble 3 peuvent être séparées de leur boitier support 8 par simple extraction du fait des légers jeux en présence.
Une telle dépose des dents 4 s'avère donc très facile et rapide.

Le montage de nouvelles dents est réalisé selon la procédure décrite ci-dessus.

Le boulon entretoise 834 remplit une fonction d'aide au démontage, en cas de besoin.

Ainsi, lors du premier montage des dents 4 dans leur boitier support 8, ce boulon rapporté 834 pourrait être positionné dans ses orifices d'accueil 10, 11 avant le positionnement des dents ; mais un positionnement a posteriori de ce boulon entretoise 834 facilite le positionnement de la dent finale.

Pour les opérations ultérieures de montage de nouvelles dents ce boulon entretoise 834 reste en place ; il est enlevé à la disqueuse uniquement si nécessaire, en cas de blocage du jeu de dents dans le logement 84 du boitier support 8.

A titre de variante de réalisation, le boulon entretoise 834 peut être remplacé par une entretoise fixe solidarisée par soudage sur la platine 81 et/ou la contre-platine 82.

L'invention propose donc une solution de montage original des dents 4 d'une fraise 1 qui permet des gains de temps tant au montage qu'au démontage de ces dents.

Une telle structure peut être envisagée pour des ensembles 3 comprenant entre deux et cinq dents, voire plus.

## Revendications

1. Fraise pour le travail du sol comprenant un arbre motorisé (2) d'axe longitudinal (L) sur lequel sont fixés une pluralité d'ensembles (3) de dents (4), chacun desdits ensembles (3) de dents (4) comprenant un support de dents (8) solidarisé avec ledit arbre motorisé (2), sur lequel support de dents (8) sont fixées n dents régulièrement réparties autour dudit axe longitudinal (L), n étant supérieur à 2, lesdites dents (4) étant constituées chacune d'une partie active (41) adaptée au travail du sol, prolongée par une embase (42) en forme de profilé plan d'épaisseur (e) et délimitée par un contour périphérique,
**caractérisée en ce que** ledit support de dents est constitué d'un boitier (8) comprenant une platine (81) et une contre-platine (82), parallèles entre elles, s'étendant chacune dans un plan perpendiculaire audit axe longitudinal (L), espacées l'une de l'autre par des entretoises (83) pour définir un logement (84) d'épaisseur (a) correspondant, au jeu près, à l'épaisseur (e) desdites embases (42) de dents (4),
lesquelles platine (81) et contre-platine (82) dudit boitier (8) comportent chacune un orifice (811, 821) pour leur traversée par ledit arbre motorisé (2), la bordure desdits orifices (811, 821) étant solidarisée par soudage avec ledit arbre motorisé (2), et des ouvertures latérales (85) étant ménagées sur la périphérie dudit boîtier (8), entre lesdites platine (81) et contre-platine (82) et entre lesdites entretoises (83), pour le passage de l'embase (42) desdites dents (4),
le contour périphérique desdites embases de dents (42) comportant :
- au moins une surface d'appui d'entretoise (421) pour l'appui contre l'une au moins desdites entretoises (83),
- une surface d'appui d'arbre (422) pour l'appui contre ledit arbre motorisé (2),
- une première surface d'appui de dent (423) pour l'appui contre l'embase (42) d'une première dent juxtaposée, et
- une seconde surface d'appui de dent (424) pour l'appui contre l'embase d'une seconde dent (4) juxtaposée,
lesdites surfaces d'appui (421, 422, 423, 424) étant adaptées pour assurer le verrouillage en position de n - 1 desdites dents dans ledit logement de boitier (84),
et la dernière desdites n dents (4), dite dent finale, étant verrouillée en position dans ledit logement de boitier (84) par un moyen de blocage rapporté (86).

2. Fraise pour le travail du sol selon la revendication 1, **caractérisée en ce que** ledit moyen de blocage rapporté de ladite dent finale (4) est en forme de boulon (86) dont la vis s'étend au travers - d'un orifice (13) ménagé dans l'embase (42) de ladite dent finale (4), et - d'un orifice (12) ménagé dans ladite platine (81) et/ou dans ladite contre-platine (82).

3. Fraise pour le travail du sol selon la revendication 2, **caractérisée en ce que** toutes ses dents (4) comportent une embase (42) munie d'un orifice (13) adapté au passage de ladite vis dudit boulon de blocage (86).

4. Fraise pour le travail du sol selon l'une quelconque des revendications 1 à 3, **caractérisée en ce que** ladite contre-platine (82) comporte une ouverture (822) qui s'étend jusqu'à son orifice (821) de passage de l'arbre motorisé (2), laquelle ouverture (822) correspond à l'encombrement d'une partie au moins de l'embase de ladite dent finale (4), pour le positionnement et le blocage partiel de cette dernière.

5. Fraise pour le travail du sol selon l'une quelconque des revendications 1 à 4, **caractérisée en ce que** chaque boitier (8) comporte :
(i) n - 1 entretoises (831, 832, 833) soudées sur la périphérie desdites platine (81) et contre-platine (82), chacune adaptée à coopérer avec ladite surface d'appui d'entretoise (421) de l'embase (42) d'une desdites dents (4), et
(ii) une entretoise (834) amovible en forme de boulon pour ladite dent finale (4).

6. Fraise pour le travail du sol selon l'une quelconque des revendications 1 à 5, **caractérisée en ce que** le contour de l'embase (42) desdites dents (4) comporte un chant arrière (42a), un chant d'extrémité (42b) et un chant avant (42c), ladite surface d'appui d'entretoise (421) étant ménagée sur ledit chant arrière (42a), ladite première surface d'appui de dent (423) étant ménagée sur ledit chant d'extrémité (42b) et lesdites seconde surface d'appui de dent (424) et surface d'appui d'arbre (422) étant ménagées sur ledit chant avant (42c).

7. Fraise pour le travail du sol selon la revendication 6, **caractérisée en ce que** ladite surface d'appui d'entretoise (421) de l'embase (42) desdites dents (4) est en forme de surface plane.

8. Fraise pour le travail du sol selon l'une quelconque des revendications 6 ou 7, **caractérisée en ce qu'**elle comporte un arbre motorisé (2) de section circulaire, et **en ce que** ladite surface d'appui d'arbre (422) de l'embase (42) desdites dents (4) est en forme d'arc de cercle.

9. Fraise pour le travail du sol selon l'une quelconque des revendications 6 à 8, **caractérisée en ce que** ladite première surface d'appui de dent (423) est en forme d'organe en saillie ménagé sur le chant d'extrémité (42b), et **en ce que** ladite seconde surface d'appui de dent (424) est en forme de réservation ménagée sur ledit chant avant (42c), lesdits organe en saillie (423) et réservation (424) ayant des formes complémentaires, de sorte qu'un organe en saillie (423) d'une dent (4) coopère avec la réservation complémentaire (424) d'une dent (4) juxtaposée pour le verrouillage en position desdites dents (4) dans ledit boitier support (8).
